# FASCICULE DE BREVET EUROPEEN

(11) **EP 4 390 584 B1**
(45) Date de publication et mention de la délivrance du brevet: **04.02.2026**
(21) Numéro de dépôt: 23215943.4
(22) Date de dépôt: 12.12.2023
(51) Int. Cl.: G05B 19/05

(54) **PROCEDE ET DISPOSITIF D'IDENTIFICATION DES RISQUES DE CYBERATTAQUES**
VERFAHREN UND VORRICHTUNG ZUR IDENTIFIZIERUNG VON CYBERANGRIFFSRISIKEN
METHOD AND APPARATUS FOR IDENTIFYING CYBERATTACK RISK

(30) Priorité: 21.12.2022 FR 2214122
(43) Date de publication de la demande: 26.06.2024
(73) Titulaire: Commissariat à l'Energie Atomique et aux Energies Alternatives, 75015 Paris (FR); Institut Polytechnique de Grenoble, 38000 Grenoble (FR); Centre National de la Recherche Scientifique, 75016 Paris (FR); Institut National de Recherche en Informatique et en Automatique, 78153 Le Chesnay Cedex (FR); Université Grenoble Alpes, 38400 Saint-Martin-d'Hères (FR)
(72) Inventeur: DA SILVA, Mike, 38054 GRENOBLE CEDEX 09 (FR); THEVENON, Pierre-Henri, 38054 GRENOBLE CEDEX 09 (FR); PUYS, Maxime, 38054 GRENOBLE CEDEX 09 (FR); MOCANU, Stéphane, 38330 BIVIERS (FR)
(74) Mandataire: Cabinet Beaumont

(56) Documents cités:
- WO-A1-2020/231334
- CN-B- 107 491 058

## Description

### Domaine technique

La présente description concerne de façon générale le domaine de la cybersécurité des systèmes industriels.

### Technique antérieure

Un système industriel intègre généralement en partie plusieurs automates programmables industriels (PLC - de l'anglais « Programmable Logic Controller ») configurés pour, par exemple, faire fonctionner des actionneurs d'une partie opérationnelle du système industriel.

D'un côté, la sûreté du système industriel (protection des personnes, de l'environnement, des biens et du service rendu) est assurée par des technologies opérationnelles telles que des solutions matérielles et/ou logicielles surveillant et contrôlant des processus et des dispositifs du système industriel.

D'un autre côté, la sécurité du système industriel (protection de l'intégrité, de la confidentialité et de la disponibilité des données) est contrôlée par des technologies de l'information, nécessitant par exemple des techniques de cybersécurité.

Cependant, l'interconnexion des technologies de l'information avec et des technologies opérationnelles augmente la surface d'attaque des systèmes industriels.

Les systèmes industriels étant de plus en plus fréquemment attaqués, il existe un besoin technique de faire converger l'analyse de la sûreté et de la sécurité desdits systèmes.

Un document WO 2020/231334 décrit une méthode de formation d'un modèle d'un système cyber-physique. Un document CN 107491058 décrit un procédé et un dispositif de détection d'attaques séquentielles sur un système de contrôle industriel.

### Résumé de l'invention

Un mode de réalisation prévoit un procédé d'identification des risques de cyberattaques selon la formulation de la revendication 1.

Selon un mode de réalisation, la génération du deuxième fichier informatique comprend :
- l'identification dans la représentation numérique du transducteur fini minimal, par une unité de traitement du dispositif, de premières transitions allant d'un état source non identifié comme sensible, dans le premier fichier informatique, vers un état destination identifié comme sensible ; et
- l'écriture dans le deuxième fichier des premières transitions.

Selon un mode de réalisation, la génération du deuxième fichier informatique comprend en outre :
- l'identification dans le transducteur fini, par l'unité de traitement, de deuxièmes transitions allant d'un état source identifié comme sensible dans le premier fichier informatique vers un état destination non identifié comme sensible ; et
- l'écriture dans le premier fichier des deuxièmes transitions.

Selon un mode de réalisation, la génération du deuxième fichier informatique comprend en outre :
- pour chaque première transition, l'identification, par l'unité de traitement du dispositif, dans la représentation numérique du transducteur fini minimal, de premières données d'entrée dont un blocage de la valeur inhibe la transition vers l'état de destination associé ; et
- l'écriture dans le deuxième fichier, des premières données d'entrée.

Selon un mode de réalisation, la génération du deuxième fichier informatique comprend en outre :
- pour chaque deuxième transition, l'identification dans la représentation numérique du transducteur fini minimal, de deuxièmes données d'entrée dont la modification de la valeur, dans l'état source associé, entraîne ladite deuxième transition.

Selon un mode de réalisation, le risque identifié associé à un élément du deuxième fichier, dans le troisième fichier, prend la forme d'une valeur d'indication codée sur au moins 2 bits.

Selon un mode de réalisation, la valeur d'un bit de la valeur d'indication indique si un blocage de la valeur de la donnée d'entrée inhibe une transition parmi les premières transitions et la valeur d'un autre bit de la valeur d'indication indique si une modification de la valeur de la donnée d'entrée entraine une transition parmi les deuxièmes transitions.

Selon un mode de réalisation, le bit le moins significatif de la valeur indique si un blocage de la valeur de la donnée d'entrée inhibe une transition parmi les premières transitions et le bit le plus significatif indique si une modification de la valeur de la donnée d'entrée entraine une transition parmi les deuxièmes transitions.

Selon un mode de réalisation, le procédé ci-dessus comprend en outre une analyse de risques, l'analyse comprenant, pour chaque élément du quatrième fichier informatique :
- l'identification, par l'unité de traitement, d'un événement redouté ayant lieu en cas d'attaque sur l'élément ;
- le calcul, par l'unité de traitement, d'une probabilité d'occurrence de l'événement ;
- la détermination, par l'unité de traitement, d'un niveau du risque sur la base d'une valeur de gravité et de la probabilité.

Selon un mode de réalisation, la probabilité d'un événement redouté est égale à l'inverse du nombre d'éléments du quatrième fichier pour lesquels l'événement redouté est identifié.

Selon un mode de réalisation, le niveau de risque d'un événement redouté est égal au produit de la probabilité de l'événement et de sa valeur de gravité.

Un mode de réalisation prévoit une mémoire non transitoire configurée pour stocker des instructions configurées pour mettre en œuvre le procédé d'identification des risques de cyberattaques ci-dessus lorsqu'elles sont exécutées par une unité de traitement.

Un mode de réalisation prévoit un dispositif de traitement de données comprenant une unité de traitement et une mémoire, le dispositif étant configuré pour mettre en œuvre le procédé d'identification des risques de cyberattaques.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma d'un procédé physique ;
la figure 2 illustre schématiquement un exemple de logique automate définissant le comportement de l'automate programmable de la figure 1 ;
la figure 3 illustre schématiquement un autre exemple de logique automate ;
la figure 4 est un graphe illustrant un exemple d'un transducteur fini ;
la figure 5 est un schéma par bloc représentant un dispositif de traitement selon un mode de réalisation de la présente description ;
la figure 6 illustre un exemple de recherche de transitions critiques entre deux états d'un transducteur fini ;
la figure 7 illustre des exemples de comportement d'un transducteur fini ;
la figure 8 est un diagramme des données échangées entre des capteurs et des automates programmables industriels ;

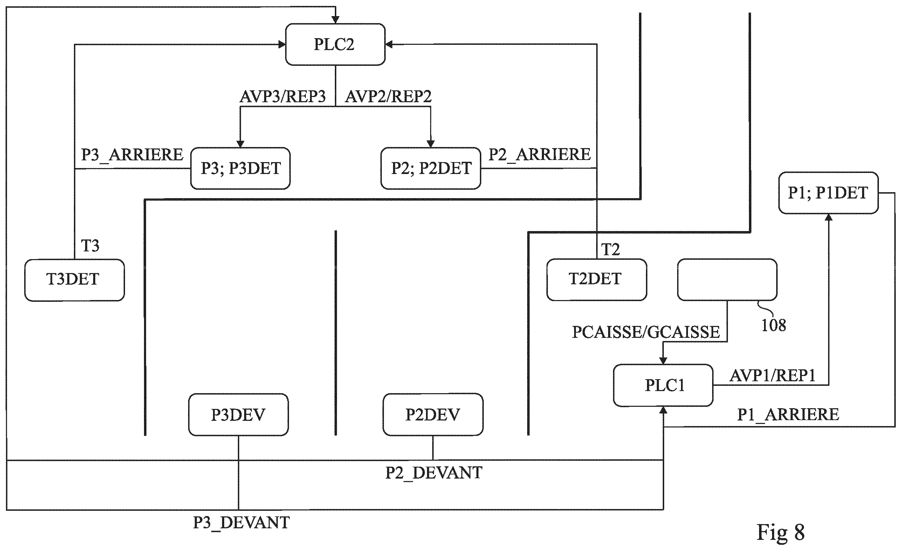

la figure 8 représente des exemple d'attaques sur l'automate programmable industriel ; et

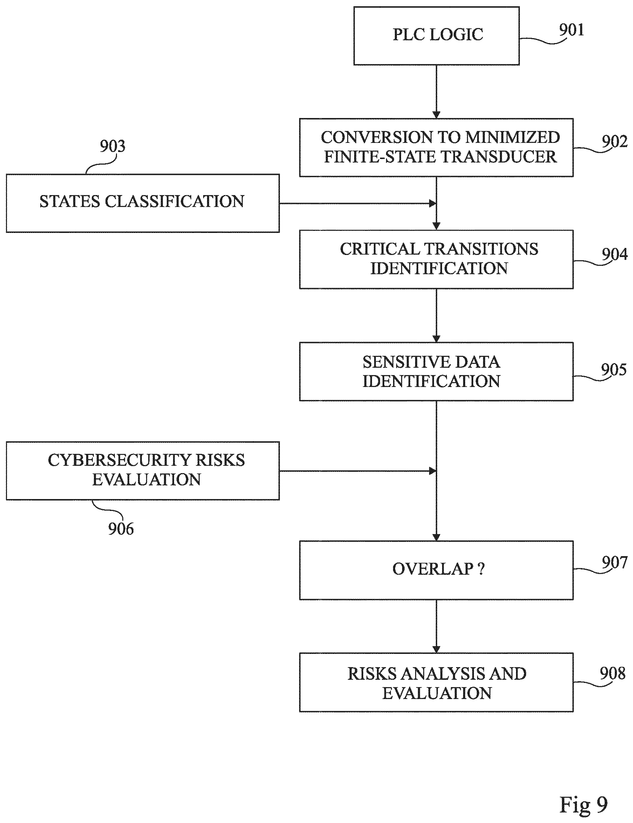

la figure 9 est un organigramme représentant différentes étapes d'un procédé d'identification des risques de cyberattaques sur un automate programmable, selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la structure hiérarchique d'un système industriel ainsi que les procédés de conversion d'une logique automate en un ou plusieurs transducteurs finis ne sont pas écrits.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la suite de la description, un automate programmable industriel (PLC) fait référence à un dispositif électronique numérique programmable configuré pour commander des processus industriels par un traitement séquentiel. A titre d'exemple, un automate programmable industriel est configuré pour commander l'exécution des actionneurs, appartenant à une partie opérative d'un système automatisé, à partir de données par exemple transmises par un capteur et/ou un détecteur, de consignes et d'un programme informatique.

Dans la suite de la description, une logique automate fait référence à un fichier informatique comprenant une description définissant le comportement attendu d'un automate industriel. Une logique automate est décrite sous forme de logiques de spécification, comme par exemple le langage Grafcet ou sous forme de programmes d'implémentation, comme par exemple le langage Ladder.

Dans la suite de la description, un transducteur à états finis fait référence à un automate fini fournissant un ou plusieurs signaux de sortie. De manière générale, un transducteur fini est caractérisé par un ensemble E des états du transducteur, l'ensemble E étant de cardinal fini, et par un ensemble T des transitions entre deux états, pouvant être distincts ou non, appartenant à l'ensemble E . Toute transition *t* ∈ *T* relie un état, dit état source, à un état, dit état destination. Chaque transition *t* ∈ *T* est en outre associé à un couple entrée/sortie, s'exprimant par exemple sous la forme de fonctions booléennes ou de séquence de bits.

Un transducteur à états finis est défini ici comme minimal si son nombre de transitions entre les états est minimal. La minimisation d'un transducteur consiste alors à minimiser le nombre de transitions, ainsi que leur nombre d'entrées. Ainsi, chaque fonction booléenne exprime une transition avec un nombre minimal d'entrée.

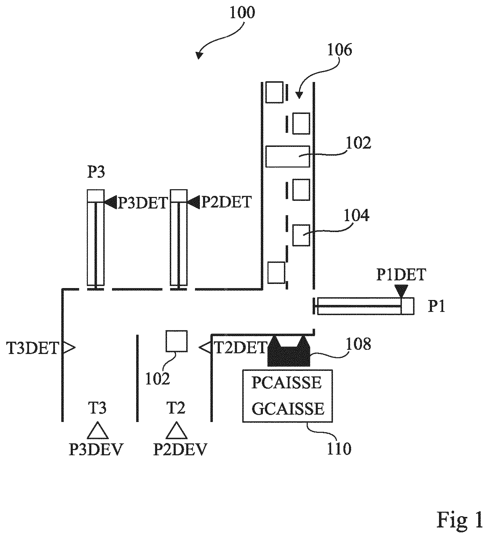

La figure 1 est un exemple d'une partie opérative 100 d'un système industriel contrôlée par une logique automate. Plus précisément, dans l'exemple de la figure 1, la logique automate a pour rôle de commander l'envoi de caisses 102 et 104 arrivant par un tapis roulant 106 vers des tapis roulants T2 ou T3, selon leur taille. Les caisses 102 sont par exemple des caisses de petite taille et sont dirigées vers le tapis roulant T2 tandis que les caisses 104 sont, par exemple, des caisses de taille supérieure et sont dirigées vers le tapis roulant T3. Un détecteur 108 est configuré pour déterminer la taille d'une caisse passant devant lui. A titre d'exemple, le détecteur 108 est configuré en outre pour activer une variable booléenne PCAISSE lorsqu'il détecte le passage d'une caisse 102 et pour activer une variable booléenne GCAISSE lorsqu'il détecte le passage d'une caisse 104. A titre d'exemple, les variables booléennes PCAISSE et GCAISSE sont stockées dans une mémoire volatile 110 de l'automate programmable.

La partie opérative comprend en outre un piston P1 configuré pour s'activer lorsque le détecteur 108 détecte le passage d'une caisse 102 ou 104. Dans l'exemple illustré par la figure 1, le piston P1 est configuré pour pousser les caisses 102 et 104 vers la gauche. Dans la suite, lorsqu'un piston a été activé, on dira qu'il est en position avant, et lorsqu'il est désactivé, qu'il est en position arrière.

La partie opérative 100 comprend en outre un détecteur P2DEV configuré pour déterminer si la caisse poussée par le piston P1 est alignée devant le tapis roulant T2. La logique automate est alors configurée pour, par exemple dans le cas où la variable PCAISSE est activée, stopper le piston P1 et activer un piston P2, positionné face au tapis roulant T2, afin de pousser la caisse sur le tapis roulant T2. La logique automate est en outre configurée pour, si par exemple la variable GCAISSE est activée, pour ne pas commander l'arrêt du piston P1. Lorsqu'un piston ayant été activé est stoppé, sa position reste la position avant. Uniquement la désactivation fait passer la position d'un piston en position arrière.

La partie opérative 100 comprend par exemple en outre un détecteur P3DEV, par exemple configuré pour détecter lorsqu'une caisse est alignée face au tapis roulant T3. La logique automate est alors configurée pour commander l'arrêt du piston P1 lorsque le détecteur P3DEV détecte le passage d'une caisse et pour activer un piston P3, par exemple placé face au tapis roulant T3.

A titre d'exemple, la partie opérative 100 comprend, en outre, des capteurs P1DET, P2DET et P3DET, respectivement configurés pour détecter lorsque que les pistons P1, P2 ou P3 sont en position avant. La logique automate est par exemple configurée pour, par exemple suite à un laps de temps, commander la désactivation d'un piston activé.

A titre d'exemple, la partie opérative 100 comprend en outre des capteurs T2DET et T3DET configurés pour détecter le passage d'une caisse sur la tapis roulant T2 ou sur le tapis roulant T3.

A titre d'exemple, les mesures prises par les différents capteurs décrits prennent la forme de variables booléennes, prenant pour valeur TRUE (vrai) ou FALSE (faux). Par exemple, la variable PCAISSE prend la valeur TRUE si la caisse détectée par le détecteur 108 est une petite caisse. Des variables P2_DEVANT et P3_DEVANT prennent par exemple la valeur TRUE lorsque, respectivement, les détecteurs P2DEV et P3DEV détecte le passage d'une caisse. De même, des variables P1_ARRIERE, P2_ARRIERE et P3_ARRIERE prennent la valeur TRUE lorsque respectivement les détecteurs P1DET, P2DET et P3DET détecte que le piston concerné est en position arrière.

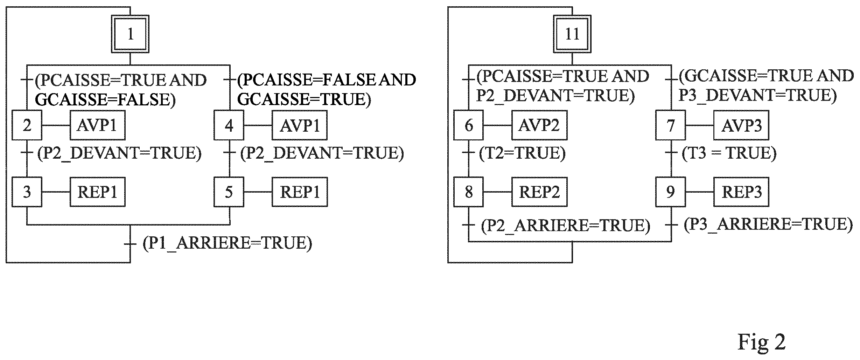

La figure 2 illustre un exemple de logique automate décrivant l'automate programmable de la figure 1. Plus particulièrement, la figure 2 illustre un diagramme fonctionnel 200 de type Grafcet (Graphe Fonctionnel de Commande des Etapes et Transitions). Le diagramme 200 décrit un langage de spécification pour la logique automate commandant la partie opérative 100.

Le diagramme 200 comprend deux diagrammes Grafcet 202 et 204. A titre d'exemple, le fonctionnement de la partie opérative 100 est commandé par deux automates programmables industriels distincts. Un premier automate programmable est décrit par le diagramme 202 et commande le fonctionnement du piston P1 et un deuxième automate programmable est décrit par le diagramme 204 et commande le fonctionnement des pistons P2 et P3. A titre d'exemple, le commandement des pistons est effectué sur la base de l'activation et/ou désactivation des variables booléennes PCAISSE et GCAISSE suite à la mesure effectuée par le détecteur 108.

A titre d'exemple, la partie 202 comprend des actions 206 (AVP1) et 208 (REP1) commandant respectivement l'activation et la désactivation du piston P1. Le diagramme 202 comprend en outre des étapes (1, 2, 3, 4, 5), l'action 206 étant par exemple associée aux étapes 2 et 4 et l'action 208 étant par exemple associée aux étapes 3 et 5. L'étape 1 correspond par exemple à la mesure par le détecteur 106 de la taille d'une caisse. La mesure de la caisse entraine par exemple l'activation et/ou désactivation des variables booléennes PCAISSE et GCAISSE.

Le diagramme 202 comprend des conditions (PCAISSE=TRUE), (GCAISSE=TRUE), la condition (PCAISSE=TRUE) correspondant à la configuration dans laquelle la valeur TRUE est affectée à la variable PCAISSE. De même, le diagramme comprend des conditions (P2_DEVANT=TRUE) et (P2_DEVANT=FALSE), (P3_DEVANT=TRUE) et (P3_DEVANT=FALSE) correspondant respectivement à l'affectation de la valeur TRUE, ou de la valeur FALSE aux variables P2_DEVANT ou P3_DEVANT. Une condition (PCAISSE=TRUE AND GCAISSE=FALSE) est remplie quand les deux conditions (PCAISSE=TRUE) et (GCAISSE=FALSE) sont remplies. Le diagramme 202 indique le passage de l'étape 1 à l'étape 2 lorsque les conditions (PCAISSE=TRUE AND GCAISSE =FALSE) sont remplies, et le passage de l'état 1 à l'état 4 lorsque la condition (PCAISSE=FALSE AND GCAISSE =TRUE)) est remplie. Dans les deux cas, l'action associée est l'activation du piston P1 afin de pousser la caisse. En particulier, la transition de l'étape 1 à l'étape 2 a lieu lorsque la condition (PCAISSE=TRUE AND GCAISSE =FALSE) est remplie et que la condition (P2_DEVANT=TRUE) n'est pas remplie. A titre d'exemple, si dans l'état 1, les conditions (PCAISSE=TRUE AND GCAISSE =FALSE) et (P2_DEVANT=TRUE) sont remplies, une transition de l'état 1 vers l'état 3 est effectuée. La condition (P2_DEVANT=TRUE), ou (P3_DEVANT=TRUE), du diagramme 200, est par exemple remplie lorsque le capteur P2DEV, ou P3DEV, détecte le passage de la caisse. Lorsque la condition (P2_DEVANT=TRUE), ou (P3_DEVANT=TRUE) est remplie, le diagramme 202 indique le passage à l'étape 5, ou 3, et l'action associée est la désactivation du piston P1. La valeur TRUE est alors affectée à la variable P1_ARRIERE. Le diagramme indique ensuite que lorsque la condition (P1_ARRIERE=TRUE) est remplie, la logique reprend à l'étape 1 pour la caisse suivante. Les transitions entre deux états d'un Grafcet sont décrites par des conditions exclusives.

Le diagramme 204 décrit la logique des pistons P2 et P3, faisant par exemple suite à la logique commandant le piston P1.

A titre d'exemple, lorsque la condition (PCAISSE AND P2_DEVANT=TRUE), ou (GCAISSE AND P3_DEVANT=TRUE), est remplie, le diagramme 204 indique le passage à une étape 6, ou 7, dont l'action associée est l'activation du piston P2, ou du piston P3. Une fois une condition (T2=TRUE), ou (T3=TRUE), remplie, correspondant par exemple à la détection par le tapis roulant T2, ou T3, du passage d'une caisse, le diagramme 204 indique le passage à une étape 8, ou 9, dont l'action associée est la désactivation du piston P2, ou P3. La position arrière du capteur P2 ou P3 est détectée par le détecteur P2DET ou par le détecteur P3DET et l'information est par exemple temporairement stockée dans une mémoire de l'automate programmable. Le diagramme 204 indique en outre que, lorsque le détecteur P2DET ou P3DET détecte que le piston P2 ou P3 est en position arrière, la logique passe à une étape 11 dans laquelle l'action est par exemple d'attendre que les conditions (PCAISSE ;P2_DEVANT=TRUE) ou (GCAISSE ;P3_DEVANT=TRUE) soit remplie.

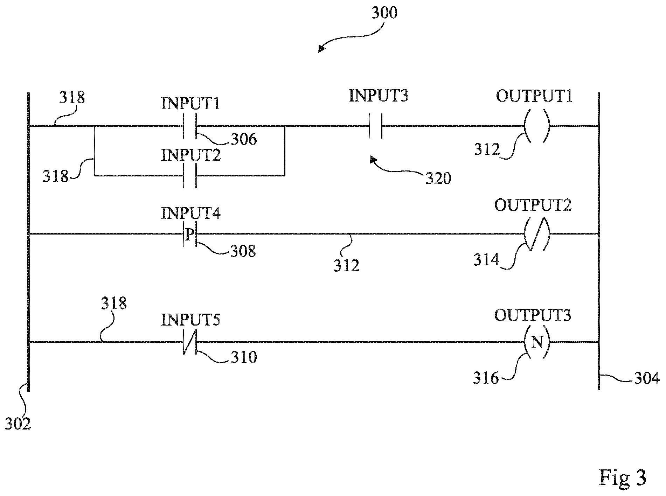

La figure 3 illustre un autre exemple de logique automate décrivant le comportement d'un automate programmable. Plus particulièrement, la figure 3 illustre un diagramme 300 en langage Ladder.

Le diagramme 300 combine des contacts ou arguments d'entrée associés à des variables booléennes INPUT1, INPUT2, INPUT3, INPUT4 et INPUT5 avec des bobines, ou résultats de sortie, associées à des variables booléennes OUTPU1, OUTPUT2 et OUTPUT3. Le diagramme 300 est limité sur la gauche et sur la droite par des lignes verticales 302 et 304 appelées respectivement barre d'alimentation à gauche et barre d'alimentation à droite.

Le diagramme 300 comprend des symboles graphiques 306, 308, 310, 312, 314 et 316 reliés aux barres d'alimentation 302 ou 304 par des arcs de lien 318. Chaque arc de lien vertical représente une opération OU LOGIQUE. Chaque arc de lien prend un état booléen TRUE ou FALSE, l'état booléen étant le même sur tous les arcs de lien directement connectés ensembles. Les arcs de liens 318 reliés à la barre d'alimentation 302 sont à l'état TRUE.

A titre d'exemple, le symbole 306 représente un contact dit direct permettant une opération booléenne entre l'état des arcs de liens 318 qui lui sont connectés et la variable booléenne INPUT1. L'état de l'arc de lien à droite du contact 306 est un ET LOGIQUE entre l'état du lien à gauche et la valeur de la variable INPUT1.

A titre d'exemple, le symbole 312 est celui d'une bobine directe associée à une sortie, par exemple OUTPUT1.

A titre d'exemple, la partie 320 du diagramme 300, décrit que quand (INPUT1=TRUE OU INPUT2=TRUE) ET INPUT3=TRUE, la sortie est OUTPUT1=TRUE. A titre d'exemple, les variables booléennes INPUT1, INPUT2 et INPUT3 sont des variables internes d'un détecteur d'une partie opérationnelle d'un système industriel et la variable de sortie OUTPUT1 permet par exemple, l'activation ou non d'un actionneur, tel que par exemple, un piston, un moteur etc. compris dans la partie opérationnelle.

Le symbole 308 décrit par exemple un contact à détection de front positif, ou front montant. L'état du lien à droite du symbole 308 est forcé à la valeur TRUE lorsque le lien à gauche du symbole 308 est à l'état TRUE et que la variable booléenne INPUT4 passe de l'état FALSE à l'état TRUE. La variable booléenne associé au contact 308 est ensuite remise à l'état FALSE.

Les symboles 310 et 314 représentent respectivement un contact inversé et une bobine inversée. L'état des liens à droite des symboles 310 est le ET LOGIQUE entre l'état du lien à gauche du symbole inversé et de l'inverse logique de la variable booléenne associée au symbole.

Le symbole 316 représente une bobine à front descendant. L'état de l'arc de lien à droite est forcé à l'état TRUE lorsque l'état du lien à gauche est TRUE et que l'état de la variable booléenne associée INPUT5 passe de FALSE à TRUE. Le contact 310 passe donc de TRUE à FALSE

Les diagrammes de type Grafcet et/ou Ladder sont des exemples de langages de spécification. Ces langages ne sont bien sûr pas limitatifs et d'autres langages de spécifications peuvent être utilisés et sont connus par la personne du métier.

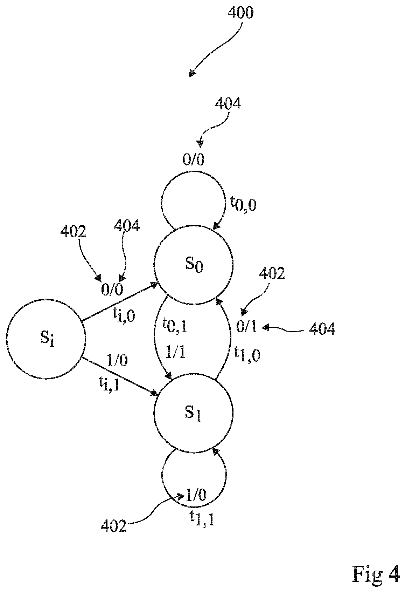

La figure 4 est un graphe 400 illustrant un exemple de transducteur fini. Plus particulièrement, le transducteur fini est une machine de Mealy.

Le transducteur fini 400 se caractérise par un ensemble d'état {*sᵢ, s*₀*, s*₁}, l'état *sᵢ* étant l'état initial du transducteur ainsi qu'un ensemble de transitions {*t*_{*i,*0}, *t*_{*t,*1}, *t*_{0,0}, *t*_{0,1}, *t*_{1,0}, *t*_{1,1}}. Chaque transition *t_{k,j},* avec k∈ {*i*, 0,1} et *j* ∈ {0,1} relie l'état *sₖ*, appelé alors état source de la transition *t_{k,j},* vers l'état *sⱼ,* appelé alors état destination de la transition *t_{k,j}.* Une transition s'effectue sur la base d'une donnée d'entrée 402, par exemple à valeur binaire, et produit une donnée de sortie 404, par exemple aussi à valeur binaire. Dans d'autres exemples, les entrées et/ou sorties d'un transducteur prennent d'autre forme que des valeurs binaires, ou des séquences de bits et peuvent, par exemple, être des variables booléennes ou des concaténations de valeurs binaires et booléennes.

Dans l'exemple du transducteur fini 400, le transducteur fini prend pour entrée un ensemble de chaînes de bits, chaque bit représentant la valeur d'une variable, et fourni un vecteur de sortie. A titre d'exemple, le transducteur fini traite l'entrée, bit par bit, allant du bit le plus significatif vers le bit le moins significatif. Si le bit le plus significatif de l'entrée est un 1, le transducteur passe de l'état initial *sᵢ* vers l'état *s*₁, via la transition *s*_{*i,*1} et renvoie un 0. Si le bit le plus significatif est un 0, le transducteur fini passe de l'état *sᵢ* vers l'état *s*₀ via la transition *t*_{*i*,0} et retourne aussi un 0.

Lorsque le transducteur fini est dans l'état *s*₁, il est configuré pour rester dans cet état lorsque le bit d'entrée est égal à 1, via la transition *t*_{1,1}, et génère en sortie un bit égal à 0. Dans l'état *s*₁, le transducteur fini est en outre configuré pour passer à l'état *s*₀, lorsque le bit d'entrée est égal à 0, via la transition *t*_{1,1}, et génère en sortie un bit égal à 1.

Lorsque le transducteur fini est dans l'état *s*₀, il est configuré pour rester dans cet état lorsque le bit d'entrée est égal à 0, via la transition *t*_{0,0}, et génère en sortie un bit égal à 0. Dans l'état *s*₀, le transducteur fini est en outre configuré pour passer à l'état *s*₁, lorsque le bit d'entrée est égal à 1, via la transition *t*_{0,1}, et génère en sortie un bit égal à 1

Ainsi, par exemple, si la valeur de la donnée d'entrée est la séquence de bits successifs 011001, le transducteur emprunte le chemin *sᵢ, t*_{*i,*0}*, s*₀, *t*_{0*,*1}*, s*₁, *t*_{1,1}, *s*₁, *t*_{1,0}, *s*₀*, t*_{0*,*0}*, s*₀, *t*_{0*,*1}*, s*₁ et la valeur de la donnée de sortie est la séquence de bits 010101.

Un état d'une machine de Mealy correspond à une des combinaisons des étapes de la logique automate. A titre d'exemple, les variables booléennes PCAISSE, GCAISSE, P2_DEVANT etc. sont les entrées permettant l'exécution des transitions. Les actions prises dans l'état destination, par exemple reculer un piston, sont les sorties des transitions.

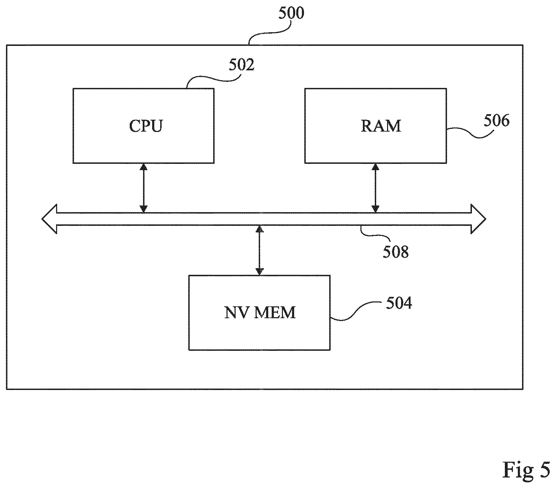

La figure 5 est un schéma par bloc représentant un dispositif de traitement 500 selon un mode de réalisation de la présente description. Le dispositif de traitement 500 est par exemple configuré pour mettre en œuvre un procédé d'identification des risques de cyberattaques sur un automate programmable.

Le dispositif de traitement 500 comprend par exemple une unité de traitement 502 (CPU), telle qu'un processeur, et une mémoire non-volatile 504 (NV MEM). Le dispositif de traitement 500 comprend par exemple en outre une mémoire volatile 506 (RAM), par exemple une mémoire à accès aléatoire (en anglais « Random Acces Memory »).

L'unité de traitement 502 est par exemple couplée aux mémoires 504 et 506 par l'intermédiaire d'un bus 508.

Selon un mode de réalisation, la mémoire non-volatile 504 comprend une représentation numérique d'une logique automate, par exemple sous forme d'un fichier de type Grafcet ou de type Ladder. La mémoire non-volatile 504 comprend par exemple en outre des instructions qui, lorsqu'elles sont exécutées par l'unité de traitement 502, permettent de convertir la représentation numérique de la logique automate en une représentation numérique d'un transducteur fini minimal.

A titre d'exemple, un transducteur fini minimal est généré à partir de la logique automate d'un seul automate programmable. Un transducteur fini minimal global est ensuite obtenu, par l'unité de traitement 502, en effectuant le produit cartésien de l'ensemble transducteurs finis minimaux. Il est, en effet, moins couteux en temps de minimiser individuellement plusieurs transducteurs finis, chacun associé à un unique automate programmable, plutôt que de minimiser un transducteur décrivant l'ensemble de la logique automate de tout une partie opérationnelle. La décomposition en un transducteur fini pour un automate programmable est présentée à titre d'exemple et n'est bien sûr pas limitative.

A titre d'exemple, un transducteur fini minimal est généré, à partir d'une logique automate, grâce à un outil informatique connu sous le nom « Teloco » (le nom « Teloco » peut être protégé par une ou plusieurs marques). Un exemple d'utilisation de l'outil « Teloco » est par exemple donné dans la publication « Translating Grafcet specifications into Mealy machines for conformance test purposes » publiée dans la revue Control Engineering Practice, vol. 19, no 9, p. 947-957, sept. 2011 par les auteurs J. Provost, J.-M. Roussel, et J.-M. Faure. La minimisation du transducteur est par exemple réalisée par l'exécution de l'algorithme de Quine-McCluskey. L'algorithme de Quine-McCluskey permet, par exemple, de minimiser un ensemble d'expressions booléennes en une expression minimale.

En relation avec l'exemple décrit dans les figures 1 et 2, l'unité de traitement 502 est configurée pour générer une représentation numérique d'un premier transducteur fini minimal à partir du Grafcet 202 et une autre représentation numérique d'un deuxième transducteur fini minimal à partir du Grafcet 204. Le produit cartésien des deux transducteurs finis minimaux est alors un transducteur minimal pour toute la logique automate 200.

A titre d'exemple, la mémoire non-volatile 504 est en outre configurée pour stocker un premier fichier informatique, par exemple stocké suite à la conversion de la logique automate en au moins un transducteur fini minimal. A titre d'exemple, le premier fichier informatique comprend un sous ensemble des états des transducteurs finis. Dans un autre exemple, le premier fichier comprend au moins un sous ensemble des états d'au moins un des transducteurs finis. Les états compris dans le premier fichier sont par exemple des états, identifiés au préalable comme des états étant sensibles, ou encore non associés à une propriété de sûreté, c'est à dire des états dans lequel la sureté du système industriel est compromise en cas d'action malveillante.

Dans l'exemple de la figure 1, si au moins un des pistons P1, P2 ou P3 reste en position avant, le système industriel est compromis, et il s'agit donc bien d'un état sensible. En effet, le passage des autres caisses sera bloqué.

Dans un autre exemple, dans lequel une partie opérationnelle comprend par exemple le remplissage d'une cuve, un état sensible est par exemple celui dans lequel une vanne de remplissage de la cuve est ouverte. En effet, si la cuve est remplie et que la vanne reste ouverte, la sureté du système est compromise.

Dans encore un autre exemple, un état dans lequel un disjoncteur n'est pas disjoncté est un état sensible. En effet si le disjoncteur reste opérationnel en présence d'un défaut électrique, le système est par exemple en danger.

A titre d'exemple, le premier fichier est également configuré pour stocker les états identifiés au préalable comme n'étant pas sensibles, ou associés à une propriété de sureté. Par exemple, les états dans lesquels les pistons P1 et/ou P2 et/ou P3 sont en position arrière sont des états assurant la sûreté du système.

De même, dans l'exemple de la cuve, un état dans lequel la vanne de la cuve est fermée est un état sûr, et il en est de même, dans l'exemple du disjoncteur, pour un état dans lequel le disjoncteur est disjoncté.

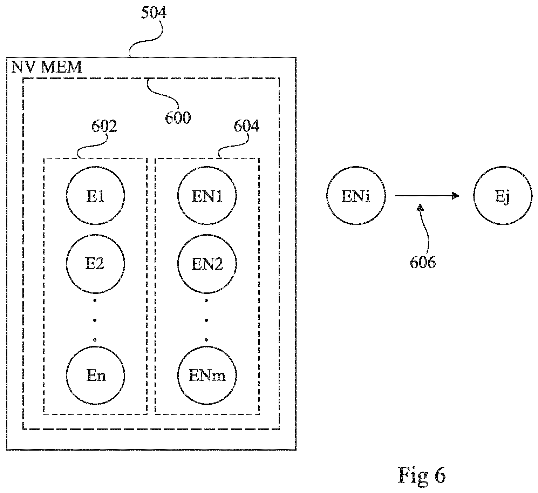

La figure 6 illustre un exemple de recherche de transitions critiques entre deux états d'un transducteur fini.

A titre d'exemple, la mémoire 504 stocke un fichier informatique 600 correspondant à un exemple du premier fichier informatique décrit en relation avec la figure 5. Le fichier informatique 600 comprend par un sous-ensemble 602 d'états E1 à En et un sous-ensemble 604 d'états EN1 à ENm. Les états E1 à En et EN1 à ENm d'un transducteur fini minimal, ou d'un ensemble de transducteurs finis minimaux. A titre d'exemple, les états E1 à En sont des états identifiés comme n'étant pas sensibles et les états EN1 à ENm sont des états identifiés comme étant sensibles.

Selon un mode de réalisation, des transitions dites critiques sont identifiées. Les transitions critiques sont des transitions qui, lorsqu'elles sont forcées ou lorsqu'elles sont empêchées, compromettent la sûreté du système industriel. A titre d'exemple, une transition critique 606 est par exemple une transition partant d'un état source ENj appartenant au sous ensemble 604, et donc sensible, et allant vers un état destination Ei appartenant au sous-ensemble 602. Les transitions critiques identifiées sont par exemple identifiées par l'unité de traitement 502 puis écrites dans un deuxième fichier informatique stocké dans la mémoire 504. Les transitions critiques se distinguent en deux types. Un premier type de transitions critiques sont les transitions allant d'un état sensible vers un état non sensible. En effet, un blocage de l'information, par exemple une attaque malveillante par blocage, peut empêcher la transition de s'effectuer et le système reste dans l'état sensible alors qu'il devrait passer à l'état non sensible. Un deuxième type de transitions critiques sont, à l'inverse, les transitions allant d'un état non sensible vers un état sensible. En effet, la modification d'une donnée, par exemple lors d'une attaque par injection, peut entrainer ce type de transition, menant le système dans un état sensible alors qu'il devrait rester dans un état non sensible.

Plus généralement, dans l'état source d'une transition critique, une éventuelle attaque par blocage d'information laisserait le système dans un état sensible. Dans l'état de destination d'une transition critique, une éventuelle attaque par injection retournerait le système vers un état sensible.

Dans l'exemple décrit en relation avec les figures 1 et 2, la transition allant d'un état source dans lequel le piston P1 est reculé vers un état destination dans lequel le piston P1 est avancé est par exemple une transition critique.

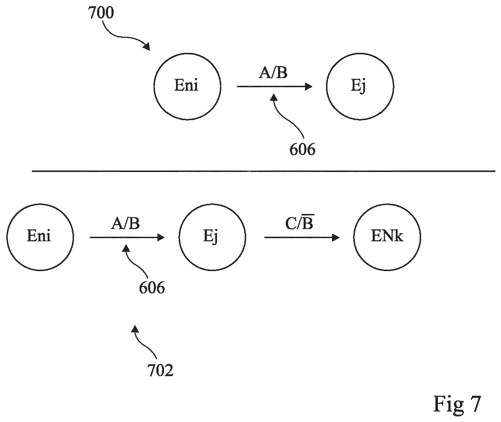

La figure 7 représente des exemples d'attaques sur le comportement d'une logique automate.

Un premier type d'attaque, illustré par le schéma 700, est l'attaque par blocage d'information. Lors d'une attaque par blocage de l'information, le rafraichissement de la valeur d'une variable, ou d'un ensemble de variables, est empêché. Ce type d'attaque entraîne l'inhibition d'une transition. Si la transition inhibée est une transition identifiée comme critique, le système reste dans un état dans lequel la sureté et la sécurité sont compromises.

A titre d'exemple, le système est dans l'état ENi et la transition vers l'état Ej, état non sensible, est exécuté lorsque qu'une variable d'entrée prend la valeur A et la valeur de sortie est par exemple une valeur B. En rapport avec l'exemple illustré par les figures 1 et 2, la valeur B correspond par exemple à une sortie telle que AV_P1, AV_P2 etc.

Si le transducteur reste involontairement bloqué dans l'état ENi, alors qu'en fonctionnement normal la transition 606 devrait être déclenchée, la sûreté du système industriel est alors compromise. Par exemple le piston P1 reste en position avant alors que la caisse a été envoyé sur un des tapis T2 ou T3 et d'autres caisses sur le tapis T1 sont alors bloquées par le piston P1.

L'état ENi est alors identifié comme sensible car la sureté du système risque d'être compromise si le système reste dans cet état alors que la transition 606 devrait être déclenché. En effet, si un attaquant bloque la valeur de la variable à non-A, le système reste dans l'état ENi et la transition vers l'état non sensible Ej n'est pas exécutée.

Un deuxième type d'attaque, illustré par le schéma 702, est l'attaque par injection de données, ou injection d'information. Lors d'une attaque par injection, la valeur d'une variable d'entrée ou d'un ensemble de variables, est falsifiée. Ce type d'attaque force une transition a s'exécuter. Si l'état de destination de la transition forcée est un état sensible, le système va dans un état dans lequel la sureté et la sécurité sont compromises.

Dans l'exemple illustré par le schéma 702, lorsque le transducteur est dans l'état Ej, une injection de données, par exemple en modifiant la valeur d'une variable d'entrée afin qu'elle soit égale à C, est effectuée. Une transition vers un état destination ENk est alors forcée. A titre d'exemple, la sortie de la transition forcée est différente de la valeur B, impliquant une action, par exemple l'ouverture d'une vanne, mettant le système dans un état sensible.

Selon un mode de réalisation, suite à l'identification des transition critiques, les données dont un blocage entraine l'inhibition d'une transition identifiée ou dont une modification ou falsification entraîne l'exécution sont à leur tour identifiées par l'unité de traitement 502 et sont ajoutées dans le deuxième fichier informatique. A titre d'exemple, une liste de données, dites risquant d'être compromises, est associée à chaque transition critique identifiée dans le deuxième fichier.

Dans l'exemple illustré par les figures 1 et 2, les variables P2_DEVANT et P3_DEVANT font par exemple partie des variables identifiées comme risquant d'être compromises. En effet leur passage de FALSE à TRUE implique, dans la logique automate, le recul du piston P1 et les caisses suivantes peuvent s'accumulées et être bloquées.

La figure 8 illustre un exemple de données échangées entre un capteur et un automate programmable industriel. Plus particulièrement, la figure 8 illustre un exemple des données échangées entre les capteurs 108, P1DET, P2DET, P3DET, P2DEV, P3DEV, T1DET et T2DET et deux automates programmables PLC1 et PLC2 par exemple commandés par les logiques automates 202 et 204 décrites en relation avec la figure 2.

A titre d'exemple, les détecteurs P2DEV et P3DEV transmettent des données, par exemple la valeur des variables P2_DEVANT et P3_DEVANT, aux deux automates programmables PLC1 et PLC2. Le détecteur 108 transmet par exemple les valeurs des variables booléennes PCAISSE et GCAISSE aux automates programmables PLC1 et PLC2. L'automate programmable PLC1 commande l'action du piston P1 sur la base des valeurs des variables PCAISSE et GCAISSE et l'automate programmable PLC2 commande soit la détection par le capteur P2DEV, soit par le capteur P3DEV, en fonction de la taille de la caisse.

A titre d'exemple, le capteur P1DET n'échange des données qu'avec l'automate programmable PLC1, commandant le fonctionnement du piston P1.

La représentation graphique des données échangées entre les différents capteurs et les différents automates programmable permet, par exemple, l'identification des variables transitant par des canaux non sécurisés. Ces variables sont alors sujettes au blocage ou à la falsification.

La figure 9 est un organigramme représentant différentes étapes d'un procédé d'identification des risques de cyberattaques sur un automate programmable, selon un mode de réalisation de la présente description. Ce procédé est par exemple mis en œuvre par le dispositif de traitement de la figure 5.

Dans une étape 901 (PLC LOGIC), une représentation numérique d'une logique automate commandant un ou plusieurs automates programmables d'un système industriel sont générés. A titre d'exemple, la représentation numérique prend la forme d'un ou plusieurs diagrammes de type Grafcet ou de type Ladder.

Dans une étape 902 (CONVERSION TO MINIMIZED FINITE-STATE TRANSDUCER), le ou les représentations numériques de la logique automate sont convertis, par exemple par l'unité de traitement 502, en un ou plusieurs transducteurs finis minimaux, qui sont des représentations numériques également stockés dans la mémoire 506. A titre d'exemple, le ou les transducteurs générés sont des machines de Mealy, générées par l'unité de traitement 502 sur la base de l'outil Teloco et sont minimisés sur la base d'une exécution de l'algorithme de Quine-McCluskey. A titre d'exemple, deux états de chaque transducteur fini sont reliés par un ensemble de combinaisons booléennes possibles. Dans l'exemple illustrée par les figures 1 et 2, les états du transducteur fini minimisé sont par exemple reliés par la concaténation des valeurs des variables booléennes enregistrées par les différents capteurs, telles que PCAISSE et GCAISSE, P2_DEVANT et P3_DEVANT, P1_ARRIERE etc.

Dans une étape 903 (STATES CLASSIFICATION), un fichier informatique contenant des classifications des différents états du ou des transducteurs finis minimaux est par exemple reçu par le dispositif de traitement 500, et stocké par exemple dans la mémoire 504 ou 506. Cette classification a par exemple été effectuée par un expert en sûreté.

La classification identifie un sous-ensemble d'états pour lesquels une propriété de sureté du système industriel n'est par exemple pas assurée. A titre d'exemple, ces états sont identifiés comme étant sensibles. A titre d'exemple, dans ces états, la sureté du système est à risque d'être compromise.

A titre d'exemple, la classification identifie également un autre sous-ensemble d'états pour lesquels le système industriel est sûr et n'a aucun, ou de faible, risque d'incident ou d'accident. A titre d'exemple, ces états sont identifiés comme n'étant pas sensibles et sont par exemple associés à une propriété de sûreté.

Les sous-ensembles d'états, ainsi que l'autre sous-ensemble d'états, sont par exemple compris dans le premier fichier informatique, stocké dans la mémoire 504 ou 506.

Dans une étape 904 (CRITICAL TRANSITIONS IDENTIFICATION) les transitions du ou des traducteurs finis allant par exemple d'un état source sensible vers un état destination non sensible sont identifiés, par exemple par l'unité de traitement 502. A titre d'exemple, l'unité de traitement 502 identifie en outre des transitions allant vers un état destination sensible. Les transitions identifiées sont par exemple dites critiques et sont écrites dans un deuxième fichier informatique, par exemple stocké dans la mémoire 504.

Dans une étape 905 (SENSITIVE DATA IDENTIFICATION), les données d'entrée qui, si bloquées ou falsifiées, inhibent ou provoquent une transition critique, sont identifiées par exemple par l'unité de traitement 502. A titre d'exemple, les données d'entrée identifiées sont écrites dans le deuxième fichier informatique, en association des transitions critiques.

Selon un mode de réalisation, chaque donnée identifiée est stockée en association avec une valeur d'indication indiquant si un blocage de la donnée inhibe une transition critique ou si une modification de sa valeur force l'exécution d'une transition critique. A titre d'exemple, la valeur d'indication est codée sur deux bits. Le bit le plus significatif prend, par exemple, la valeur 1 si une modification de la valeur force l'exécution d'une transition critique et le bit le moins significatif prend, par exemple, la valeur 1, si un blocage de la valeur inhibe une transition critique. En effet, une injection est basée sur une modification de donnée et le blocage d'information est basé sur un déni, or la modification d'une donnée utilise un plus grand privilège qu'un déni. Un blocage est alors associé à une valeur supérieure ou égales à 1(01 - 10) et une injection est associé à une valeur supérieure ou égale à 2(10 - 11). A titre d'exemple, la valeur 10 n'a pas de sens car une modification permet un déni. Dans un autre exemple le blocage est codé sur le bit le plus significatif. Ce codage sur 2 bits est donné à titre d'exemple d'implémentation et n'est bien sûr pas limitatif.

Dans une étape 906 (CYBERSECURITY RISKS EVALUATION), une évaluation des risques cybersécurité sur la partie opérationnelle est réalisé. A titre d'exemple, l'évaluation des risques s'effectue en utilisant un outil Microsoft Threat Modeling Tool permettant de générer un diagramme de flux de donnée (DFD), par exemple de la forme du graphe illustré en relation avec la figure 8. Le diagramme généré permet à un expert en cybersécurité d'identifier les données transitant par des canaux non-sécurisés et par conséquent susceptibles d'être bloquées et/ou falsifiées.

A titre d'exemple, les données identifiées dans l'étape 906 sont écrites dans un troisième fichier informatique, stocké dans la mémoire 504.

Dans une étape 907 (OVERLAP?), l'unité de traitement 502 est configurée pour déterminer, par exemple, quelles données appartiennent à la fois au deuxième et au troisièmes fichiers informatiques. Les données communes sont par exemple stockées dans un quatrième fichier informatique. A titre d'exemple, les données sont stockée en association avec la valeur d'indication leur étant associé dans le deuxième fichier.

Dans une étape 908 (RISKS ANALYSIS AND EVALUATION), le ou les risques pour le système industriel en cas d'attaque sur au moins une donnée sont analysés et évalués.

A titre d'exemple, pour chaque donnée, l'analyse et l'évaluation des risques comprend la détermination d'une conséquence. La conséquence correspond par exemple à la réalisation d'un événement redouté. L'événement redouté est par exemple un événement pouvant avoir lieu lorsque le transducteur est dans un état sensible. Par exemple l'accumulation de caisses sur un tapis roulant, le débordement d'une cuve de remplissage ou un incendie, par exemple déclenché si un défaut électrique a lieu et qu'un disjoncteur reste fermé.

A titre d'exemple, pour chaque événement redouté, une probabilité d'apparition est calculée. Par exemple la probabilité P est égale à 1/nbr_entree, la valeur nbr_entree correspondant au nombre de variables d'entrée à corrompre pour que l'événement redouté puisse avoir lieu.

A titre d'exemple, un niveau de risque pour l'événement redouté est ensuite évalué. Pour chaque événement, une valeur de conséquence Cons est déterminée, par exemple sous la forme d'un score entre 0 et 10 ou entre 0 et 100 correspondant à la gravité de l'événement. Par exemple la valeur de conséquence pour une accumulation de caisse sur un tapis roulant à un score moins élevé qu'un incendie. Le niveau de risque R d'un évènement est par exemple égal au produit entre la valeur de conséquence et la probabilité d'apparition de l'événement.

A titre d'exemple, une évaluation des risques pour un système industriel comprend un ensemble de scénario S, chaque scénario *n* ES décrivant par exemple un événement redouté, chaque scénario étant par exemple associé à une probabilité et un niveau de risque *Rₙ*.

Un avantage des modes de réalisation décrits est qu'ils permettent d'évaluer des risques à partir d'une analyse de sécurité d'un système industriel et d'une analyse des risques de cybersécurité.

Enfin, la mise en oeuvre pratique des modes de réalisation et variantes décrits est à la portée de la personne du métier à partir des indications fonctionnelles données ci-dessus. En particulier, pour ce qui est de la conversion des logiques automates en transducteurs finis minimaux.

## Revendications

1. Procédé d'identification des risques de cyberattaques sur un automate programmable, une logique automate de l'automate programmable étant configurée pour contrôler un système industriel, le procédé étant implémenté par un dispositif de traitement de données (500) comprenant une unité de traitement (502) et une mémoire (504, 506), le procédé comprenant :
- la génération, par le dispositif (500), d'une représentation numérique d'un transducteur fini minimal sur la base d'une spécification de la logique automate de l'automate programmable, le transducteur fini minimal comprenant un ensemble d'états sources, un ensemble d'états destination et un ensemble de transitions, chaque transition allant d'un état source vers un état destination sur la base d'une valeur de donnée d'entrée ;
- la génération et le stockage dans la mémoire d'un deuxième fichier informatique, sur la base d'un premier fichier informatique identifiant un sous-ensemble d'états sensibles parmi l'ensemble d'états, les états sensibles étant ceux qui compromettent la sureté du système industriel en cas d'action malveillante, le deuxième fichier comprenant une liste de transitions critiques associées aux états sensibles, et pour chaque transition, une liste des données d'entrée, les transitions critiques étant des transitions qui, lorsqu'elles sont forcées ou lorsqu'elles sont empêchées, compromettent la sûreté du système industriel ; et
- la génération et le stockage dans la mémoire d'un quatrième fichier informatique, sur la base d'un troisième fichier informatique indiquant la présence ou non d'un risque de corruption sur au moins chaque donnée d'entrée comprise dans le deuxième fichier, le quatrième fichier indiquant, parmi les données d'entrée, des données d'entrée à protéger qui sont à la fois associées à des transitions critiques et à un risque de corruption, ces données d'entrée étant à risque d'une cyberattaque.

2. Procédé selon la revendication 1, dans lequel la génération du deuxième fichier informatique comprend :
- l'identification dans la représentation numérique du transducteur fini minimal, par une unité de traitement du dispositif, de premières transitions allant d'un état source non identifié comme sensible, dans le premier fichier informatique, vers un état destination identifié comme sensible ; et
- l'écriture dans le deuxième fichier des premières transitions.

3. Procédé selon la revendication 2, dans lequel la génération du deuxième fichier informatique comprend:
- l'identification dans le transducteur fini, par l'unité de traitement, de deuxièmes transitions allant d'un état source identifié comme sensible dans le premier fichier informatique vers un état destination non identifié comme sensible ; et
- l'écriture dans le premier fichier des deuxièmes transitions.

4. Procédé selon la revendication 2 ou 3, dans lequel la génération du deuxième fichier informatique comprend :
- pour chaque première transition, l'identification, par l'unité de traitement du dispositif, dans la représentation numérique du transducteur fini minimal, de premières données d'entrée dont un blocage de la valeur inhibe la transition vers l'état de destination associé ; et
- l'écriture dans le deuxième fichier, des premières données d'entrée.

5. Procédé selon la revendication 4 dans sa dépendance à la revendication 3, dans lequel la génération du deuxième fichier informatique comprend :
- pour chaque deuxième transition, l'identification dans la représentation numérique du transducteur fini minimal, de deuxièmes données d'entrée dont la modification de la valeur, dans l'état source associé, entraîne ladite deuxième transition.

6. Procédé selon l'une quelconque des revendications 1 à 5, dans lequel le risque identifié associé à un élément du deuxième fichier, dans le troisième fichier, prend la forme d'une valeur d'indication codée sur au moins 2 bits.

7. Procédé selon la revendication 6, dans lequel la valeur d'un bit de la valeur d'indication indique si un blocage de la valeur de la donnée d'entrée inhibe une transition parmi les premières transitions et la valeur d'un autre bit de la valeur d'indication indique si une modification de la valeur de la donnée d'entrée entraine une transition parmi les deuxièmes transitions.

8. Procédé selon la revendication 7, dans lequel le bit le moins significatif de la valeur indique si un blocage de la valeur de la donnée d'entrée inhibe une transition parmi les premières transitions et le bit le plus significatif indique si une modification de la valeur de la donnée d'entrée entraine une transition parmi les deuxièmes transitions.

9. Procédé selon la revendication 1 à 8, comprenant une analyse de risques, l'analyse comprenant, pour chaque élément du quatrième fichier informatique :
- l'identification, par l'unité de traitement (502), d'un événement redouté ayant lieu en cas d'attaque sur l'élément ;
- le calcul, par l'unité de traitement (502), d'une probabilité d'occurrence de l'événement ;
- la détermination, par l'unité de traitement (502), d'un niveau du risque sur la base d'une valeur de conséquence de l'événement et de la probabilité d'occurrence de l'événement calculée.

10. Procédé selon la revendication 9, dans lequel, la probabilité d'un événement redouté est égale à l'inverse du nombre d'éléments du quatrième fichier pour lesquels l'événement redouté est identifié.

11. Procédé selon la revendication 9 ou 10, dans lequel le niveau de risque d'un événement redouté est égal au produit de la probabilité d'occurrence de l'événement calculée et de sa valeur de conséquence.

12. Mémoire non transitoire (504, 506) configurée pour stocker des instructions configurées pour mettre en œuvre le procédé d'identification des risques de cyberattaques de l'une quelconque des revendications 1 à 11 lorsqu'elles sont exécutées par une unité de traitement.

13. Dispositif de traitement de données (500) comprenant une unité de traitement (502) et une mémoire (504, 506), le dispositif étant configuré pour mettre en œuvre le procédé d'identification des risques de cyberattaques de l'une quelconque des revendications 1 à 11.

## Patentansprüche

1. Verfahren zur Identifizierung von Risiken von Cyberangriffen auf eine speicherprogrammierbare Steuerung, wobei eine Steuerungslogik der speicherprogrammierbaren Steuerung zur Steuerung eines industriellen Systems konfiguriert ist, wobei das Verfahren durch eine Datenverarbeitungsvorrichtung (500) implementiert wird, die eine Verarbeitungseinheit (502) und einen Speicher (504, 506) aufweist, wobei das Verfahren Folgendes aufweist:
- die Erzeugung einer digitalen Darstellung eines minimierten endlichen Zustandsumformers durch die Vorrichtung (500) auf Grundlage einer Spezifikation der Steuerungslogik der speicherprogrammierbaren Steuerung, wobei der minimierte endliche Zustandsumformer einen Satz von Quellzuständen, einen Satz von Zielzuständen und einen Satz von Übergängen aufweist, wobei jeder Übergang von einem Quellzustand zu einem Zielzustand auf Grundlage eines Eingangsdatenwerts beginnt;
- die Erzeugung und die Speicherung in den Speicher einer zweiten Computerdatei, und zwar auf Grundlage einer ersten Computerdatei, die eine Teilmenge sensibler Zustände aus dem Satz von Zuständen identifiziert, wobei die sensiblen Zustände diejenigen sind, die im Falle einer böswilligen Handlung die Sicherheit des industriellen Systems gefährden, wobei die zweite Datei eine Liste kritischer Übergänge aufweist, die mit den sensiblen Zuständen verbunden sind, sowie für jeden Übergang eine Liste der Eingangsdaten, wobei die kritischen Übergänge Übergänge sind, die, wenn sie erzwungen oder wenn sie verhindert werden, die Sicherheit des industriellen Systems gefährden; und
- die Erzeugung und die Speicherung in den Speicher einer vierten Computerdatei, und zwar auf Grundlage einer dritten Computerdatei, die das Vorhandensein oder Nichtvorhandensein eines Risikos der Korruption mindestens jedes in der zweiten Datei enthaltenen Eingabedatenelements anzeigt, wobei die vierte Datei unter den Eingabedaten zu schützenden Eingabedaten anzeigt, die sowohl mit kritischen Übergängen als auch mit einem Risiko der Korruption verbunden sind, wobei diese Eingabedaten einem Risiko für einen Cyberangriff ausgesetzt sind.

2. Verfahren nach Anspruch 1, wobei die Erzeugung der zweiten Computerdatei Folgendes aufweist:
- die Identifizierung in der digitalen Darstellung des minimierten endlichen Zustandswandlers, und zwar durch eine Verarbeitungseinheit der Vorrichtung, von ersten Übergängen von einem Quellzustand, der in der ersten Computerdatei nicht als sensibel identifiziert ist, zu einem Zielzustand, der als sensibel identifiziert ist; und
- das Schreiben der ersten Übergänge in die zweite Datei.

3. Verfahren nach Anspruch 2, wobei die Erzeugung der zweiten Computerdatei Folgendes aufweist:
- die Identifizierung in dem endlichen Zustandswandler, und zwar durch die Verarbeitungseinheit, von zweiten Übergängen von einem in der ersten Computerdatei als sensibel identifizierten Quellzustand zu einem nicht als sensibel identifizierten Zielzustand; und
- das Schreiben der zweiten Übergänge in die erste Datei.

4. Verfahren nach Anspruch 2 oder 3, wobei die Erzeugung der zweiten Computerdatei Folgendes aufweist:
- für jeden ersten Übergang, die Identifizierung, und zwar durch die Verarbeitungseinheit der Vorrichtung, in der digitalen Darstellung des minimierten endlichen Zustandswandlers von ersten Eingangsdaten, deren Wert blockiert ist, wodurch der Übergang zum zugehörigen Zielzustand verhindert wird; und
- das Schreiben der ersten Eingangsdaten in die zweite Datei.

5. Verfahren nach Anspruch 4 in Abhängigkeit von Anspruch 3, wobei die Erzeugung der zweiten Computerdatei Folgendes aufweist:
- für jeden zweiten Übergang, die Identifizierung in der digitalen Darstellung des minimierten endlichen Zustandswandlers, von zweiten Eingangsdaten, deren Wertänderung im zugehörigen Quellzustand den zweiten Übergang verursacht.

6. Verfahren nach einem der Ansprüche 1 bis 5, wobei das identifizierte Risiko, das mit einem Element der zweiten Datei in der dritten Datei verbunden ist, die Form eines über mindestens 2 Bits codierten Anzeigewerts annimmt.

7. Verfahren nach Anspruch 6, wobei der Wert eines Bits des Anzeigewerts anzeigt, ob eine Blockierung des Werts des Eingabedatenelements einen Übergang unter den ersten Übergängen verhindert, und wobei der Wert eines anderen Bits des Anzeigewerts anzeigt, ob eine Änderung des Werts des Eingabedatenelements einen Übergang unter den zweiten Übergängen verursacht.

8. Verfahren nach Anspruch 7, wobei das niedrigstwertige Bit des Wertes anzeigt, ob eine Blockierung des Wertes des Eingabedatenelements einen Übergang zwischen den ersten Übergängen verhindert, und das höchstwertige Bit anzeigt, ob eine Änderung des Wertes des Eingabedatenelements einen Übergang zwischen den zweiten Übergängen bewirkt.

9. Verfahren nach Anspruch 1 bis 8, aufweisend eine Risikoanalyse, wobei die Analyse für jedes Element der vierten Computerdatei Folgendes aufweist:
- die Identifizierung eines befürchteten Ereignisses, das im Falle eines Angriffs auf das Element eintritt, durch die Verarbeitungseinheit (502);
- die Berechnung einer Eintrittswahrscheinlichkeit des Ereignisses durch die Verarbeitungseinheit (502);
- die Bestimmung einer Risikostufe durch die Verarbeitungseinheit (502) auf Grundlage eines Folgenwerts des Ereignisses und der berechneten Eintrittswahrscheinlichkeit des Ereignisses.

10. Verfahren nach Anspruch 9, wobei die Wahrscheinlichkeit eines befürchteten Ereignisses gleich dem Kehrwert der Anzahl der Elemente der vierten Datei ist, für die das befürchtete Ereignis identifiziert wird.

11. Verfahren nach Anspruch 9 oder 10, wobei das Risikoniveau eines befürchteten Ereignisses gleich dem Produkt aus der berechneten Eintrittswahrscheinlichkeit des Ereignisses und seinem Folgenwert ist.

12. Nichtflüchtiger Speicher (504, 506), der so konfiguriert ist, dass er Befehle speichert, die so konfiguriert sind, dass sie das Verfahren zur Identifizierung von Cyberangriffsrisiken gemäß einem der Ansprüche 1 bis 11 implementieren, wenn sie von einer Verarbeitungseinheit ausgeführt werden.

13. Datenverarbeitungsvorrichtung (500) mit einer Verarbeitungseinheit (502) und einem Speicher (504, 506), wobei die Vorrichtung so konfiguriert ist, dass sie das Verfahren zur Identifizierung von Cyberangriffsrisiken gemäß einem der Ansprüche 1 bis 11 implementiert.

## Claims

1. Method of identification of risks of cyberattacks on a programmable logic controller, controller logic of the programmable logic controller being configured to control an industrial system, the method being implemented by a data processing device (500) comprising a processing unit (502) and a memory (504, 506), the method comprising:
- the generation, by the device (500), of a digital representation of a minimized finite-state transducer based on a specification of the controller logic of the programmable logic controller, the minimized finite-state transducer comprising a set of source states, a set of destination states, and a set of transitions, each transition starting from a source state to a destination state based on a input data value;
- the generation and the storage into the memory of a second computer file, based on a first computer file identifying a subset of sensitive states among the set of states, the sensitive states being those that compromised the safety of the industrial system in case of a malicious action the second file comprising a list of critical transitions associated with the sensitive states, and for each transition, a list of the input data, the critical transitions being transitions which, when they are forced or when they are prevented, compromise the safety of the industrial system; and
- the generation and the storage into the memory of a fourth computer file, based on a third computer file indicating the presence or not of a risk of corruption on at least each input data element contained in the second file, the fourth file indicating, among the input data, input data to be protected which are both associated with critical transitions and with a risk of corruption, these input data being at risk for a cyberattack.

2. Method according to claim 1, wherein the generation of the second computer file comprises:
- the identification in the digital representation of the minimized finite-state transducer, by a processing unit of the device, of first transitions from a source state not identified as sensitive, in the first computer file, to a destination state identified as sensitive; and
- the writing into the second file of the first transitions.

3. Method according to claim 2, wherein the generation of the second computer file comprises:
- the identification in the finite-state transducer, by the processing unit, of second transitions from a source state identified as sensitive in the first computer file to a destination state not identified as sensitive; and
- the writing into the first file of the second transitions.

4. Method according to claim 2 or 3, wherein the generation of the second computer file comprises:
- for each first transition, the identification, by the processing unit of the device, in the digital representation of the minimized finite-state transducer, of first input data having a blocking of their value inhibiting the transition to the associated destination state; and
- the writing into the second file of the first input data.

5. Method according to claim 4 as dependent on claim 3, wherein the generation of the second computer file comprises:
- for each second transition, the identification in the digital representation of the minimized finite-state transducer, of second input data having the modification of their value, in the associated source state, causing said second transition.

6. Method according to any of claims 1 to 5, wherein the identified risk associated with an element of the second file, in the third file, takes the form of an indication value coded over at least 2 bits.

7. Method according to claim 6, wherein the value of a bit of the indication value indicates whether a blocking of the value of the input data element inhibits a transition among the first transitions and the value of another bit of the indication value indicates whether a modification of the value of the input data element causes a transition among the second transitions.

8. Method according to claim 7, wherein the least significant bit of the value indicates whether a blocking of the value of the input data element inhibits a transition among the first transitions and the most significant bit indicates whether a modification of the value of the input data element causes a transition among the second transitions.

9. Method according to claim 1 to 8, comprising a risk analysis, the analysis comprising, for each element of the fourth computer file:
- the identification, by the processing unit (502), of a feared event occurring in case of an attack on the element;
- the calculation, by the processing unit (502), of a probability of occurrence of the event;
- the determination, by the processing unit (502), of a level of the risk based on a consequence value of the event and on the calculated probability of occurrence of the event.

10. Method according to claim 9, wherein the probability of a feared event is equal to the inverse of the number of elements of the fourth file for which the feared event is identified.

11. Method according to claim 9 or 10, wherein the risk level of a feared event is equal to the product of the calculated probability of occurrence of the event and of its consequence value.

12. Non-transient memory (504, 506) configured to store instructions configured to implement the method of identification of cyberattack risks of any of claims 1 to 11 when they are executed by a processing unit.

13. Data processing device (500) comprising a processing unit (502) and a memory (504, 506), the device being configured to implement the method of identification of cyberattack risks of any of claims 1 to 11.
